(19) **Europäisches Patentamt / European Patent Office / Office européen des brevets**

(11) **EP 4 195 543 A1**

(12) **EUROPEAN PATENT APPLICATION**
published in accordance with Art. 153(4) EPC

(43) Date of publication:
**14.06.2023 Bulletin 2023/24**

(51) International Patent Classification (IPC):
**H04L 1/00** (2006.01)    **H04W 72/04** (2023.01)

(21) Application number: **21852888.3**

(86) International application number:
**PCT/CN2021/106858**

(22) Date of filing: **16.07.2021**

(87) International publication number:
**WO 2022/028233** (10.02.2022 Gazette 2022/06)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.08.2020 CN 202010790892**

(71) Applicant: **ZTE Corporation**
**Shenzhen, Guangdong 518057 (CN)**

(72) Inventors:
• **BIAN, Luanjian**
**Shenzhen, Guangdong 518057 (CN)**

• **DAI, Bo**
**Shenzhen, Guangdong 518057 (CN)**
• **HU, Youjun**
**Shenzhen, Guangdong 518057 (CN)**
• **FANG, Huiying**
**Shenzhen, Guangdong 518057 (CN)**
• **LIU, Kun**
**Shenzhen, Guangdong 518057 (CN)**
• **YANG, Weiwei**
**Shenzhen, Guangdong 518057 (CN)**

(74) Representative: **Gevers Patents**
**Intellectual Property House**
**Holidaystraat 5**
**1831 Diegem (BE)**

(54) **CHANNEL QUALITY REPORTING METHOD AND DEVICE, CHANNEL QUALITY RECEIVING METHOD AND DEVICE, TERMINAL, SERVICE NODE, AND MEDIUM**

(57)    The present application provides a channel quality reporting method and device, a channel quality receiving method and device, a terminal, a service node, and a medium. The method comprises: determining a first channel quality indicator (CQI) set, the first CQI set comprising an association relationship between a CQI and channel quality parameters; and reporting the CQI on the basis of the first CQI set. The channel quality parameters comprise at least one of a modulation mode, a code rate, spectral efficiency, a modulation and coding scheme (MCS) index, a transport block size (TBS) index, and the number of times of repetition.

Determine a first channel quality indicator (CQI) set, the first CQI set comprising an association relationship between a CQI and channel quality parameters, and the channel quality parameters comprising at least one of a modulation mode, a code rate, spectral efficiency, a modulation and coding scheme (MCS) index, a transport block size (TBS) index, and the number of times of repetition — 110

Report the CQI on the basis of first CQI set — 120

FIG. 1

**Description**

TECHNICAL FIELD

The present disclosure relates to the wireless communication networks, e.g., to a channel quality reporting method, a channel quality receiving method, a channel quality reporting device, a channel quality receiving device, a terminal, a service node, and a medium.

BACKGROUND

In the air interface standard, a modulation mode of quadrature phase shift keying (QPSK) is mainly used for downlink data transmission. The modulation modes in the air interface standard is monotonous, and have a limited span of data block size, so that channel quality indicator (CQI) reporting related to modulation and coding modes is not supported. However, with the development of new air interface (also referred to as new radio, NR) technologies, modulation modes supported by communication systems are expanded. For example, quadrature amplitude modulation (QAM) is supported. In this case, more modulation and coding schemes (MCSs) are generated, and more and more factors need to be comprehensively considered in scheduling and communication processes at a network side. Since the CQI reporting mode is single and inflexible, and cannot be applied to different scenarios of a communication system, a comprehensive understanding of channel quality at the network side cannot be ensured, thereby affecting a scheduling efficiency and a communication performance.

SUMMARY

The following is a summary of the subject matters described in detail herein. This summary is not intended to limit the protection scope of the claims.
Embodiments of the present disclosure provide a channel quality reporting method, and the method includes:

determining a first CQI set, the first CQI set including association relationships between CQIs and a channel quality parameter, and the channel quality parameter including at least one of a modulation mode, a code rate, a spectrum efficiency, an MCS index, a transport block size (TBS) index or a repetition number; and
reporting a CQI based on the first CQI set.

Embodiments of the present disclosure further provide a channel quality receiving method, and the method includes:

determining a first CQI set, the first CQI set including association relationships between CQIs and a channel quality parameter, and the channel quality parameter including at least one of a modulation mode, a code rate, a spectrum efficiency, an MCS index, a TBS index or a repetition number; and
receiving a CQI based on the first CQI set.

Embodiments of the present disclosure further provide a channel quality reporting device, and the device includes a first determining module and a reporting module.
The first determining module is configured to determine a first CQI set. The first CQI set includes association relationships between CQIs and a channel quality parameter, and the channel quality parameter include at least one of a modulation mode, a code rate, a spectrum efficiency, an MCS index, a TBS index or a repetition number.
The reporting module is configured to report a CQI based on the first CQI set.
Embodiments of the present disclosure further provide a channel quality receiving device, and the device includes a second determining module and a receiving module.
The second determining module is configured to determine a first CQI set. The first CQI set includes association relationships between CQIs and a channel quality parameter, and the channel quality parameter include at least one of a modulation mode, a code rate, a spectrum efficiency, an MCS index, a TBS index or a repetition number.
The receiving module is configured to receive a CQI based on the first CQI set.
Embodiments of the present disclosure further provide a terminal, and the terminal includes:

one or more processors; and
a storage device configured to store one or more programs.

When the one or more programs are executed by the one or more processors, the one or more processors implement the channel quality reporting method.

Embodiments of the present disclosure further provide a service node, and the service node includes:

one or more processors; and
a storage device configured to store one or more programs.

When the one or more programs are executed by the one or more processors, the one or more processors implement the channel quality receiving method.

Embodiments of the present disclosure further provide a computer-readable storage medium storing a computer program therein. When the program is executed by a processor, the channel quality reporting method or the channel quality receiving method is implemented.

Other aspects will be apparent upon reading and understanding the drawings and detailed description.

BRIEF DESCRIPTION OF THE DRAWINGS

FIG. 1 is a flowchart of a channel quality reporting method, in accordance with an embodiment;
FIG. 2 is a flowchart of a channel quality receiving method, in accordance with an embodiment;
FIG. 3 is a schematic structural diagram of a channel quality reporting device, in accordance with an embodiment;
FIG. 4 is a schematic structural diagram of a channel quality receiving device, in accordance with an embodiment;
FIG. 5 is a schematic diagram of a hardware structure of a terminal, in accordance with an embodiment; and
FIG. 6 is a schematic diagram of a hardware structure of a service node, in accordance with an embodiment.

DETAILED DESCRIPTION

The present disclosure will be described below with reference to the accompanying drawings and embodiments. It can be understood that specific embodiments described herein are intended only to explain the present disclosure, and are not intended to limit the present disclosure. It will be noted that the embodiments and features in the embodiments in the present disclosure may be arbitrarily combined with each other without conflict. It will be further noted that for the convenience of description, only some of structures associated with the present disclosure, but not all of the structures, are shown in the drawings.

In the embodiments of the present disclosure, a channel quality reporting method is provided, in which a terminal reports a channel quality indicator (CQI) based on association relationships between CQIs and channel quality parameter(s), so that a flexibility of the CQI reporting is improved, and a service node may accurately acquire the channel quality, thereby improving a scheduling efficiency and a communication performance.

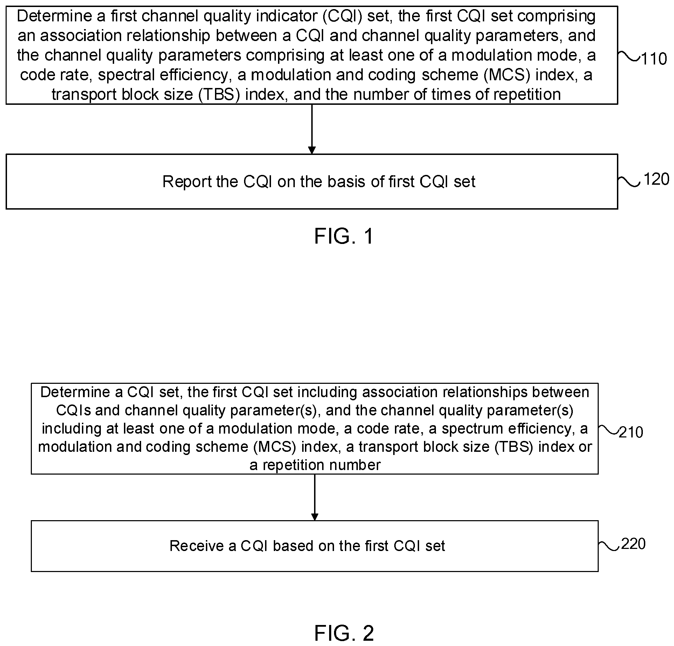

FIG. 1 is a flowchart of a channel quality reporting method, in accordance with an embodiment. As shown in FIG. 1, the method provided in this embodiment includes steps 110 and 120.

In step 110, a first CQI set is determined. The first CQI set includes the association relationships between the CQIs and the channel quality parameter(s). The channel quality parameter(s) include at least one of a modulation mode, a code rate, a spectrum efficiency, a modulation and coding scheme (MCS) index, a transport block size (TBS) index or a repetition number.

In this embodiment, the code rate may be expressed as a product of an encoding rate and 1024. For example, if the encoding rate is 1/4, the code rate is equal to 256.

In this embodiment, the repetition number is a repetition number of a physical downlink shared channel (PDSCH). In this embodiment, the MCS index and the TBS index are an MCS sequence number and a TBS sequence number, respectively.

In step 120, a CQI is reported based on the first CQI set.

In this embodiment, the first CQI set may be embodied in the form of a table. The first CQI set stores the association relationships between the CQIs and the channel quality parameter(s). The terminal obtains the channel quality parameter(s) by measuring a physical channel, and accordingly, a corresponding CQI may be reported to the service node for the service node to make a scheduling decision. The channel quality parameter(s) may include one or more of the modulation mode, the code rate, the spectrum efficiency, the MCS index, the TBS index or the repetition number. Different CQIs are expressed by different CQI indexes, and a CQI is reported, which means that a CQI index is reported.

In this embodiment, the terminal reports the CQI based on the first CQI set. The first CQI set is associated with one or more channel quality parameters. Value(s) of channel quality parameter(s) that each CQI corresponds to are each set to be reasonably distributed in a possible value range, so as to reflect different channel qualities as uniformly as possible, so that signal-to-noise ratio intervals required by decoding of the CQIs are uniform, and a code rate of each CQI matched with a corresponding TBS better, thereby improving the flexibility of the CQI reporting and reporting an accurate channel quality. Moreover, the first CQI set includes many CQIs corresponding to a 16QAM modulation mode, which is conducive to improving a data transmission efficiency at a high signal-to-noise ratio. On this basis, the service node may accurately acquire the channel quality fed back by the terminal, thereby improving the scheduling efficiency and the communication performance.

In an embodiment, there is at least one CQI index in the first CQI set. A code rate associated with the CQI index is equal to an average value of code rates corresponding to two adjacent CQI indexes in a predefined second CQI set.

In this embodiment, there is at least one CQI index in the first CQI set. A code rate corresponding to the CQI index is equal to an average value of code rates of two adjacent CQIs in the second CQI set. The second CQI set is predefined.

In this embodiment, when the average value of the code rates is a non-integer value, the average value of the code rates may be rounded up or down based on this non-integer value. For example, if the average value of the code rates is 251.5, the average value of the code rates may take a value of 251 or 252.

Table 1 Association relationship of the CQI index and the channel quality parameters in the second CQI set

| CQI index | Modulation mode | Code rate | Spectrum efficiency |
|---|---|---|---|
| 0 | Over range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

Table 1 is an association relationship table of the CQI index and the channel quality parameters in the second CQI set. As shown in Table 1, association relationships between the CQI index and the modulation mode, between the CQI index and the code rate (the product of the encoding rate and 1024), between the CQI index and the spectral efficiency are predefined in a standard version.

In an embodiment, if the average value of the code rates corresponding to two adjacent CQI indexes in the second CQI set is a non-integer value, a code rate associated with a corresponding CQI index in the first CQI set may be equal to this non-integer value, or may be a value rounded up or down based on this non-integer value. The code rate may be expressed as the product of the encoding rate and 1024. Based on this code rate distribution, the signal-to-noise ratio intervals required by the decoding of the CQIs may be more uniform, and the code rate of each CQI matches with the corresponding TBS better.

For example, a code rate corresponding to a CQI index in the first CQI set is equal to an average value of a code rate of CQI 2 and a code rate of CQI 3 in the second CQI set as shown in Table 1, i.e., 156.5 ((120 + 193) / 2 = 156.5); or this average value may be rounded up to 157.

For another example, a code rate corresponding to a CQI index in the first CQI set is equal to an average value of a code rate of CQI 3 and a code rate of CQI 4 in the second CQI set as shown in Table 1, i.e., 250.5 ((193 + 308) / 2 = 250.5); or this average value may be rounded up to 251.

For yet another example, a code rate corresponding to a CQI index in the first CQI set is equal to an average value of a code rate of CQI 4 and a code rate of CQI 5 in the second CQI set as shown in Table 1, i.e., 378.5 ((308 + 449) / 2 = 378.5); or this average value may be rounded up to 379.

For yet another example, a code rate corresponding to a CQI index in the first CQI set is equal to an average value of a code rate of CQI 5 and a code rate of CQI 6 in the second CQI set as shown in Table 1, i.e., 525.5 ((449 + 602) / 2 = 525.5); or this average value may be rounded up to 526.

For yet another example, a code rate corresponding to a CQI index in the first CQI set is equal to an average value of a code rate of CQI 7 and a code rate of CQI 8 in the second CQI set as shown in Table 1, i.e., 434 ((378 + 490) / 2 = 434).

For yet another example, a code rate corresponding to a CQI index in the first CQI set is equal to an average value of a code rate of CQI 8 and a code rate of CQI 9 in the second CQI set as shown in Table 1, i.e., 553 ((490 + 616) / 2 = 553).

For yet another example, a code rate corresponding to a CQI index in the first CQI set is equal to an average value of a code rate of CQI 12 and a code rate of CQI 13 in the second CQI set as shown in Table 1, i.e., 719 ((666 + 772) / 2 = 719).

For yet another example, a code rate corresponding to a CQI index in the first CQI set is equal to an average value of a code rate of CQI 13 and a code rate of CQI 14 in the second CQI set as shown in Table 1, i.e., 822.5 ((772 + 873) / 2 = 822.5); or this average value may be rounded up to 823.

For yet another example, a code rate corresponding to a CQI index in the first CQI set is equal to an average value of a code rate of CQI 14 and a code rate of CQI 15 in the second CQI set as shown in Table 1, i.e., 910.5 ((873 + 948) / 2 = 910.5); or this average value may be rounded up to 911.

In an embodiment, there is at least one CQI index k in the first CQI set. A code rate associated with the CQI index k is equal to an average value of code rates corresponding to a CQI index k-1 and a CQI index k+1 in the first CQI set, and k is greater than 0 and less than 31.

In this embodiment, there is at least one CQI index k in the first CQI set. A code rate of the CQI k is equal to an average value of a code rate of CQI k-1 and a code rate of CQI k+1 in the first CQI set, and k is greater than 0 and less than 31.

For example, in the first CQI set, the code rate of CQI k is equal to the average value (i.e., 156.5) of the code rate of CQI k-1 (i.e., 120) and the code rate of CQI k+1 (i.e., 193); or this average value may be rounded up to 157. For another example, the code rate of CQI k is equal to the average value (i.e., 413.75) of the code rate of CQI k-1 (i.e., 378.5) and the code rate of CQI k+1 (i.e., 449); or this average value may be rounded up to 414. For yet another example, the code rate of CQI k is equal to the average value (i.e., 434) of the code rate of CQI k-1 (i.e., 378) and the code rate of CQI k+1 (i.e., 490). For yet another example, the code rate of CQI k is equal to the average value (i.e., 413.75) of the code rate of CQI k-1 (i.e., 666) and the code rate of CQI k+1 (i.e., 772); or this average value may be rounded up to 719.

In an embodiment, there is at least one CQI index h in the first CQI set. A code rate associated with the CQI index h is equal to an average value of code rates corresponding to a CQI index h-1 and a CQI index h+2 in the first CQI set, and h is greater than 0 and less than 29. Alternatively, in the first CQI set, there is at least one CQI index h. A code rate associated with the CQI index h is equal to an average value of code rates corresponding to a CQI index h-2 and a CQI index h+1 in the first CQI set, and h is greater than 1 and less than 30.

For example, in the first CQI set, a code rate of CQI h is equal to an average value of a code rate of CQI h-1 (i.e., 308) and a code rate of CQI h+2 (i.e., 449), i.e., 378.5; or this average value may be rounded up to 379. For another example, the code rate of CQI h is equal to an average value of a code rate of CQI h-2 (i.e., 490) and a code rate of CQI h+1 (i.e., 616), i.e., 553.

In an embodiment, the first CQI set includes TBS 0 to 22, or MCSs associated with TBS 0 to 22.

Table 2 is a first association relationship table of the CQI index and the channel quality parameters in the first CQI set. The table for the first CQI set may include at least two columns including the CQI indexes in Table 2. It will be noted that in Table 2, TBS 0 to TBS 22 may also be replaced with MCS indexes associated with TBS 0 to TBS 22. In this case, the header of the last column in Table 2 is replaced with the MCS index, and the first CQI set may be used to reflect association relationships between the CQI index and at least one channel quality parameter of the modulation mode, the code rate, the spectrum efficiency or the MCS index.

Table 2 First association relationship of the CQI index and the channel quality parameters in the first CQI set

| CQI index | Modulation mode | Code rate | Spectrum efficiency | TBS index |
|---|---|---|---|---|
| 0 | Over range | | | |
| 1 | QPSK | 78 | 0.1523 | 0 |

(continued)

| CQI index | Modulation mode | Code rate | Spectrum efficiency | TBS index |
|---|---|---|---|---|
| 2 | QPSK | 120 | 0.2344 | 1 |
| 3 | QPSK | 156.5 | 0.3057 | 2 |
| 4 | QPSK | 193 | 0.3770 | 3 |
| 5 | QPSK | 250.5 | 0.4893 | 4 |
| 6 | QPSK | 308 | 0.6016 | 5 |
| 7 | QPSK | 378.5 | 0.7393 | 6 |
| 8 | QPSK | 413.75 | 0.8081 | 7 |
| 9 | QPSK | 449 | 0.8770 | 8 |
| 10 | QPSK | 525.5 | 1.0264 | 9 |
| 11 | QPSK | 602 | 1.1758 | 10 |
| 12 | 16QAM | 339.5 | 1.3262 | 11 |
| 13 | 16QAM | 378 | 1.4766 | 12 |
| 14 | 16QAM | 434 | 1.6953 | 13 |
| 15 | 16QAM | 490 | 1.9141 | 14 |
| 16 | 16QAM | 521.5 | 2.0371 | 15 |
| 17 | 16QAM | 553 | 2.1602 | 16 |
| 18 | 16QAM | 616 | 2.4063 | 17 |
| 19 | 16QAM | 666 | 2.6016 | 18 |
| 20 | 16QAM | 719 | 2.8086 | 19 |
| 21 | 16QAM | 772 | 3.0156 | 20 |
| 22 | 16QAM | 822.5 | 3.2129 | 21 |
| 23 | 16QAM | 910.5 | 3.5566 | 22 |

In an embodiment, a difference between code rates corresponding to any two adjacent CQIs associated with a second modulation mode in the first CQI set is less than a difference between code rates corresponding to any two adjacent CQIs associated with the second modulation mode in the second CQI set. For example, as shown in Table 2, a difference between code rates corresponding to any two adjacent 16QAM CQIs in Table 2 is less than a difference between code rates corresponding to any two adjacent 16QAM CQIs in Table 1.

Table 3 is a second association relationship table of the CQI index and the channel quality parameters in the first CQI set. The table for the first CQI set may include at least two columns including the CQI index in Table 3. It will be noted that in Table 3, TBS 0 to TBS 22 may be replaced with MCS indexes associated with TBS 0 to TBS 22. In this case, the header of the last column in Table 3 is replaced with MCS index. As shown in Table 3, the first CQI set is a 4-bit table. That is, the first CQI set includes 16 CQIs.

In Table 3, the first CQI set includes at least one CQI index, and a code rate corresponding to the CQI index is equal to an average value (or an average value that is rounded up) of code rates corresponding to two adjacent CQI indexes in the second CQI set (as shown in Table 1). For example, a code rate of CQI 2 in Table 3 is equal to the average value of the code rate of CQI 2 (i.e., 120) and the code rate of CQI 3 (i.e., 193) in the second CQI set, i.e., 156.5, or this average value may be rounded up to 157; a code rate of CQI 3 is equal to the average value of the code rate of CQI 3 (i.e., 193) and the code rate of CQI 4 (i.e., 308) in the second CQI set, i.e., 250.5, or this average value may be rounded up to 251; a code rate of CQI 4 is equal to the average value of the code rate of CQI 4 (i.e., 308) and the code rate of CQI 5 (i.e., 449) in the second CQI set, i.e., 378.5, or this average value may be rounded up to 379; a code rate of CQI 9 is equal to the average value of the code rate of CQI 8 (i.e., 490) and the code rate of CQI 9 (i.e., 616) in the second CQI set, i.e., 553; a code rate of CQI 12 is equal to the average value of the code rate of CQI 12 (i.e., 666) and the code rate of CQI 13 (i.e., 772) in the second CQI set, i.e., 719; a code rate of CQI 14 is equal to the average value of the code rate of CQI 13 (i.e., 772) and the code rate of CQI 14 (i.e., 873) in the second CQI set, i.e., 822.5, or this average value may be rounded up to 823; a code rate of CQI 15 is equal to the average value of the code rate of CQI 14 (i.e., 873) and the code rate of CQI 15 (i.e., 948) in the second CQI set, i.e., 910.5, or this average value may be rounded up to 911.

Table 3 Second association relationship of the CQI index and the channel quality parameters in the first CQI set

| CQI index | Modulation mode | Code rate | Spectrum efficiency | TBS index |
|---|---|---|---|---|
| 0 | Over range | | | |
| 1 | QPSK | 78 | 0.1523 | 0 |
| 2 | QPSK | 156.5 | 0.3057 | 2 |
| 3 | QPSK | 250.5 | 0.4893 | 4 |
| 4 | QPSK | 378.5 | 0.7393 | 6 |
| 5 | QPSK | 449 | 0.8770 | 8 |
| 6 | QPSK | 602 | 1.1758 | 10 |
| 7 | 16QAM | 378 | 1.4766 | 12 |
| 8 | 16QAM | 490 | 1.9141 | 14 |
| 9 | 16QAM | 553 | 2.1602 | 16 |
| 10 | 16QAM | 616 | 2.4063 | 17 |
| 11 | 16QAM | 666 | 2.6016 | 18 |
| 12 | 16QAM | 719 | 2.8086 | 19 |
| 13 | 16QAM | 772 | 3.0156 | 20 |
| 14 | 16QAM | 822.5 | 3.2129 | 21 |
| 15 | 16QAM | 910.5 | 3.5566 | 22 |

In Table 3, the first CQI set includes at least one CQI index k, a code rate corresponding to the CQI index is equal to an average value of a code rate of CQI k-1 and a code rate of CQI k+1, where k is greater than 0 and less than 31. For example, in Table 3, k is equal to 9 (k = 9), and the code rate of CQI 9 is equal to an average value (i.e., 553) of a code rate of CQI 8 (i.e., 490) and a code rate of CQI 10 (i.e., 616). For another example, k is equal to 12 (k = 12), and the code rate of CQI 12 is equal to an average value (i.e., 719) of a code rate of CQI 11 (i.e., 666) and a code rate of CQI 13 (i.e., 772).

In an embodiment, in the first CQI set, a difference between TBS indexes associated with every two adjacent CQI indexes associated with a first modulation mode is 2.

In this embodiment, the first modulation mode is QPSK. For an out-band deployment or a standalone deployment, in the first CQI set, an interval between TBS indexes associated with every two adjacent CQI indexes of the QPSK modulation mode is 1. That is, the difference between the TBS indexes is 2. As shown in Table 3, CQI 1 to CQI 6 are associated with the QPSK modulation mode, and an interval between corresponding TBS indexes is 1.

In an embodiment, in the first CQI set, each CQI is associated with an MCS index, and each MCS index is associated with a TBS index.

In this embodiment, the CQI index and the TBS index may be indirectly associated. For example, the CQI index is associated with the MCS index, and the MCS index is associated with the TBS index. On this basis, a TBS index that each CQI index is associated with may be determined. For another example, the CQI index corresponds to a code rate, and according to the code rate and 1520 resource elements (REs), TBS may be calculated according to a formula

$$S = \left(\frac{C}{1024}\right) \cdot 1520 \cdot m - 24$$, so as to obtain a corresponding TBS index, thereby determining the TBS index that each CQI index is associated with. In the formula, S is TBS, i.e., the number of bits of the transport block, C is a product of the encoding rate and 1024, and m is a modulation order. A modulation order m for QPSK is equal to 2 (i.e., m = 2), a modulation order m for 16QAM is equal to 4 (i.e., m = 4), and a modulation order m for 64QAM is equal to 6 (i.e., m = 6).

In this embodiment, the modulation mode associated with the CQI index may also be determined according to the MCS index. For example, the CQI index is associated with the MCS index, and the MCS index is associated with the modulation mode. On this basis, a modulation mode that each CQI is associated with may be determined.

In an embodiment, in the first CQI set, there are N CQI indexes associated with the second modulation mode. In the N CQI indexes associated with the second modulation mode, a difference between TBS indexes associated with every two adjacent CQI indexes is 1, and N is greater than or equal to 2.

In this embodiment, the second modulation mode is 16 QAM. In the first CQI set, there are N CQIs of the 16QAM modulation mode; an interval between TBS indexes associated with every two adjacent 16QAM CQI indexes is 0, that is, a difference between the TBS indexes is 1, and N is greater than or equal to 2. For example, in Table 3, a difference between TBS indexes associated with CQI 9 to CQI 15 is 1, and N is equal to 7 (N = 7).

In an embodiment, the N CQIs associated with the second modulation mode are N CQIs with the largest indexes in the first CQI set.

As shown in Table 3, there are 16 CQIs in the first CQI set, i.e., CQI 0 to CQI 15 in which 7 CQIs associated with 16QAM are CQI 9 to CQI 15.

In an embodiment, in the first CQI set, a TBS index associated with a CQI with the largest index is 21 or 22.

In this embodiment, for the out-band deployment or the standalone deployment, in the first CQI set, the largest CQI index is associated with the TBS index 21 or TBS index 22 (as shown in Table 3).

In an embodiment, in the first CQI set, P CQI indexes are sequentially associated with TBS index 0 to TBS index P-1, where P takes a value of 22 or 23.

For example, in the first CQI set, 22 CQI indexes (CQI 1 to CQI 22) are sequentially associated with TBS indexes 0 to 21; or as shown in Table 3, 23 CQI indexes (CQI 1 to 23) are sequentially associated with TBS indexes 0 to 22.

In an embodiment, the first CQI set is a 4-bit table. That is, the first CQI set includes 16 CQI indexes. In the 16 CQI indexes, 15 CQI indexes are associated with 15 MCS indexes in 16 MCS indexes (MCS 0 to MCS 15).

Table 4 Third association relationship of the CQI index and the channel quality parameter in the first CQI set

| CQI index | MCS index |
| --- | --- |
| 0 | Over range |
| 1 | 0 |
| 2 | 1 |
| 3 | 2 |
| 4 | 3 |
| 5 | 4 |
| 6 | 5 |
| 7 | 6 |
| 8 | 7 |
| 9 | 8 |
| 10 | 9 |
| 11 | 10 |
| 12 | 11 |
| 13 | 12 |
| 14 | 13 |
| 15 | 14 |

Table 5 Fourth association relationship of the CQI index and the channel quality parameter in the first CQI set

| CQI index | MCS index |
| --- | --- |
| 0 | Over range |
| 1 | 1 |
| 2 | 2 |
| 3 | 3 |
| 4 | 4 |

(continued)

| CQI index | MCS index |
|---|---|
| 5 | 5 |
| 6 | 6 |
| 7 | 7 |
| 8 | 8 |
| 9 | 9 |
| 10 | 10 |
| 11 | 11 |
| 12 | 12 |
| 13 | 13 |
| 14 | 14 |
| 15 | 15 |

Table 4 is a third association relationship table of the CQI index and the channel quality parameter in the first CQI set. As shown in Table 4, the first CQI set includes 16 CQI indexes in which 15 CQI indexes are respectively associated with MCS 0 to MCS 14.

Table 5 is a fourth association relationship table of the CQI index and the channel quality parameter in the first CQI set. As shown in Table 5, the first CQI set includes 16 CQI indexes in which 15 CQI indexes are respectively associated with MCS 1 to MCS 15.

In an embodiment, 15 CQI indexes are associated with MCS index 0, 1, ..., j-1, j +1, ..., 15. A difference between TBS indexes associated with MCS j+1 and MCS j-1 is 2. For example, the MCS j-1 is associated with TBS m, the MCS j+1 is associated with TBS n, and a difference between n and m is 2 (n - m = 2).

In an embodiment, the first CQI set includes M CQIs, and M is greater than 16. In the M CQIs, M-1 CQI indexes are associated with MCS indexes 0 to M-2.

In this embodiment, TBS indexes associated with MCS index 0 to M-2 are in a range of 0 to 21, or 0 to 22. For example, TBS indexes associated with CQI 1 to CQI 22 in the first CQI set are in the range of 0 to 21, or TBS indexes associated with CQI 1 to CQI 23 are in the range of 0 to 22.

In an embodiment, the first CQI set includes M CQI indexes, where M is greater than or equal to 8. In the M CQI indexes, M-1 CQI indexes are respectively associated with M-1 MCS indexes in MCS index 0 to MCS index M-1.

For example, the first CQI set includes 16 CQI indexes in which 15 CQI indexes are respectively associated with 15 MCS indexes in MCS 0 to MCS 15.

In an embodiment, the first CQI set includes M CQI indexes, where M is greater than or equal to 8. In the M CQIs, M-1 CQIs are respectively associated with MCS index 0 to MCS index M-2.

For example, the first CQI set includes 16 CQI indexes in which 15 CQI indexes are respectively associated with MCS 0 to MCS 14.

In an embodiment, for an in-band deployment, the reported CQI is less than or equal to a CQI index associated with a TBS index L, where L is equal to 16 or 17.

For example, L is equal to 16 (L = 16), TBS 16 corresponds to CQI 9, and the CQI reported by the terminal may be one of CQI 0 to CQI 9.

For another example, L is equal to 17 (L = 17), TBS 17 corresponds to CQI 10, and the CQI reported by the terminal may be one of CQI 0 to CQI 10.

In an embodiment, there is at least one CQI subset in the first CQI set. An MCS index or a TBS index or a code rate that each CQI index is associated with in the CQI subset is the same, and a repetition number that each CQI index is associated with in the CQI subset is different.

In this embodiment, there may be one or more CQI subsets in the first CQI set.

For example, a CQI subset includes CQI 2 and CQI 4, and MCS indexes associated with CQI 2 and CQI 4 are the same, but corresponding repetition numbers are different. For another example, a CQI subset includes CQI 5 and CQI 7, and TBS indexes associated with CQI 5 and CQI 7 are the same, but corresponding repetition numbers are different.

In this embodiment, the table for the first CQI set includes the repetition number and one of the MCS index, the TBS index, the code rate or the modulation mode.

In this embodiment, the repetition number is the repetition number of the physical downlink shared channel (PDSCH).

Table 6 is a fifth association relationship table of the CQI index and the channel quality parameters in the first CQI set. The table for the first CQI set may include at least three columns including the CQI index in Table 6.

Table 6 Fifth association relationship of the CQI index and the channel quality parameters in the first CQI set

| CQI index | Modulation mode | Code rate | MCS index | TBS index | Repetition number |
|---|---|---|---|---|---|
| 0 | Over range | | | | |
| 1 | QPSK | 78 | 0 | 0 | 2048 |
| 2 | QPSK | 78 | 1 | 0 | 512 |
| 3 | QPSK | 157 | 2 | 2 | 64 |
| 4 | QPSK | 251 | 1 | 4 | 32 |
| 5 | QPSK | 379 | 2 | 6 | 16 |
| 6 | QPSK | 251 | 3 | 4 | 2 |
| 7 | QPSK | 379 | 4 | 6 | 1 |
| 8 | QPSK | 449 | 3 | 8 | 1 |
| 9 | QPSK | 602 | 4 | 10 | 1 |
| 10 | 16QAM | 378 | 5 | 12 | 1 |
| 11 | 16QAM | 490 | 7 | 14 | 1 |
| 12 | 16QAM | 553 | 9 | 16 | 1 |
| 13 | 16QAM | 666 | 11 | 18 | 1 |
| 14 | 16QAM | 772 | 13 | 20 | 1 |
| 15 | 16QAM | 911 | 15 | 22 | 1 |

Table 7 Sixth association relationship of the CQI index and the channel quality parameters in the first CQI set

| CQI index | Modulation mode | Code rate | Spectrum efficiency | TBS index | Repetition number |
|---|---|---|---|---|---|
| 0 | Over range | | | | |
| 1 | QPSK | 78 | 0.1523 | 0 | 2048 |
| 2 | QPSK | 78 | 0.1523 | 0 | 512 |
| 3 | QPSK | 120 | 0.2344 | 1 | 128 |
| 4 | QPSK | 157 | 0.3066 | 2 | 64 |
| 5 | QPSK | 193 | 0.3770 | 3 | 32 |
| 6 | QPSK | 251 | 0.4902 | 4 | 16 |
| 7 | QPSK | 193 | 0.3770 | 3 | 8 |
| 8 | QPSK | 157 | 0.3066 | 2 | 4 |
| 9 | QPSK | 78 | 0.1523 | 0 | 1 |
| 10 | QPSK | 120 | 0.2344 | 1 | 1 |
| 11 | QPSK | 157 | 0.3066 | 2 | 1 |
| 12 | QPSK | 193 | 0.3770 | 3 | 1 |
| 13 | QPSK | 251 | 0.4902 | 4 | 1 |
| 14 | QPSK | 308 | 0.6016 | 5 | 1 |

(continued)

| CQI index | Modulation mode | Code rate | Spectrum efficiency | TBS index | Repetition number |
|---|---|---|---|---|---|
| 15 | QPSK | 379 | 0.7393 | 6 | 1 |
| 16 | QPSK | 414 | 0.8086 | 7 | 1 |
| CQI index | Modulation mode | Code rate | Spectrum efficiency | TBS index | Repetition number |
| 17 | QPSK | 449 | 0.8770 | 8 | 1 |
| 18 | QPSK | 526 | 1.0273 | 9 | 1 |
| 19 | QPSK | 602 | 1.1758 | 10 | 1 |
| 20 | 16QAM | 340 | 1.3281 | 11 | 1 |
| 21 | 16QAM | 378 | 1.4766 | 12 | 1 |
| 22 | 16QAM | 434 | 1.6953 | 13 | 1 |
| 23 | 16QAM | 490 | 1.9141 | 14 | 1 |
| 24 | 16QAM | 522 | 2.0391 | 15 | 1 |
| 25 | 16QAM | 553 | 2.1602 | 16 | 1 |
| 26 | 16QAM | 616 | 2.4063 | 17 | 1 |
| 27 | 16QAM | 666 | 2.6016 | 18 | 1 |
| 28 | 16QAM | 719 | 2.8086 | 19 | 1 |
| 29 | 16QAM | 772 | 3.0156 | 20 | 1 |
| 30 | 16QAM | 823 | 3.2148 | 21 | 1 |
| 31 | 16QAM | 911 | 3.5586 | 22 | 1 |

Table 7 is a sixth association relationship table of the CQI index and the channel quality parameters in the first CQI set. The table for the first CQI set may include at least three columns including the CQI index in Table 7.

In an embodiment, there are at least two CQIs in the first CQI set, which satisfy at least one of: the CQI indexes are in negative correlation with code rates respectively associated with the CQI indexes; the CQI indexes are in negative correlation with MCS indexes respectively associated with the CQI indexes; the CQI indexes are in negative correlation with TBS indexes associated with the CQI indexes.

In this embodiment, there are at least two CQIs in the first CQI set. Assuming that the CQI indexes are k1 and k2, and k1 is less than k2, an MCS index (and/or TBS index) associated with CQI k1 is greater than an MCS index (and/or TBS index) associated with CQI k2. That is, the larger the CQI index, the smaller the associated MCS index (and/or TBS index).

In this embodiment, there are at least two CQIs in the first CQI set. Assuming that the CQI indexes are k1 and k2, and k1 is less than k2, a code rate associated with CQI k1 is greater than a code rate associated with CQI k2. That is, the larger the CQI index, the smaller the associated code rate.

As shown in Table 7, CQI 2 is associated with MCS 3 and TBS 3, and CQI 3 is associated with MCS 2 and TBS 2.

In an embodiment, the channel quality reporting method further includes step 130.

In step 130, a repetition number of a physical downlink control channel (PDCCH) is reported in a case where a channel quality reporting instruction is received.

In this embodiment, the terminal reports the CQI and the repetition number of the PDCCH to the service node in a case where the terminal receives the channel quality reporting instruction. The channel quality reporting instruction instructs the terminal to measure and report the CQI and the repetition number of the PDCCH to the service node.

In an embodiment, the step 120 includes:

in the case where the channel quality reporting instruction is received, the CQI is reported based on the first CQI set, and the repetition number of the PDCCH is reported based on the first CQI set.

In an embodiment, the step 120 includes:

in a case where the channel quality reporting instruction is received and the repetition number of the PDCCH is less than or equal to a threshold value, the CQI is reported based on the first CQI set, and the repetition number of the PDCCH is reported based on the first CQI set; alternatively, in a case where the channel quality reporting instruction is received and the repetition number of the PDCCH is greater than the threshold value, the repetition number of the PDCCH is reported without reporting the CQI.

The channel quality reporting instruction instructs the terminal to measure the CQI and the repetition number of the PDCCH.

In this embodiment, the repetition number of the PDCCH is a repetition number of the PDCCH indicated in downlink control information, or a repetition number of the PDCCH obtained by measurement.

In this embodiment, in the case where the channel quality reporting instruction is received and the repetition number of the PDCCH is less than or equal to the threshold value, the terminal reports the CQI to the service node based on the first CQI set; otherwise, the terminal does not report the CQI to the service node based on the first CQI set.

In an embodiment, the step 120 includes: reporting the CQI based on the first CQI set by using a semi-persistent scheduling physical uplink shared channel (SPS PUSCH).

In the embodiments of the present disclosure, a channel quality receiving method is provided, in which a service node receives a CQI based on association relationships between CQIs and channel quality parameter(s), so that the channel quality is flexibly and accurately obtained, thereby improving the scheduling efficiency and the communication performance.

FIG. 2 is a flowchart of a channel quality receiving method, in accordance with an embodiment. As shown in FIG. 2, the method provided in this embodiment includes steps 210 and 220.

In step 210, a first CQI set is determined. The first CQI set includes the association relationships between the CQIs and the channel quality parameter(s). The channel quality parameter(s) include at least one of a modulation mode, a code rate, a spectrum efficiency, an MCS index, a TBS index or a repetition number.

In step 220, a CQI is received based on the first CQI set.

In an embodiment, there is at least one CQI index in the first CQI set. A code rate associated with the CQI index is equal to an average value of code rates corresponding to two adjacent CQI indexes in a predefined second CQI set.

In an embodiment, there is at least one CQI index k in the first CQI set. A code rate associated with the CQI index k is equal to an average value of code rates corresponding to a CQI index k-1 and a CQI index k+1 in the first CQI set, where k is greater than 0 and less than 31.

In an embodiment, there is at least one CQI index h in the first CQI set. A code rate associated with the CQI index h is equal to an average value of code rates corresponding to a CQI index h-1 and a CQI index h+2 in the first CQI set, where h is greater than 0 and less than 29.

Alternatively, there is at least one CQI index h in the first CQI set. A code rate associated with the CQI index h is equal to an average value of code rates corresponding to a CQI index h-2 and a CQI index h+1 in the first CQI set, where h is greater than 1 and less than 30.

In an embodiment, a difference between code rates corresponding to any two adjacent CQIs associated with a second modulation mode in the first CQI set is less than a difference between code rates corresponding to any two adjacent CQIs associated with the second modulation mode in the second CQI set.

In an embodiment, in the first CQI set, a difference between TBS indexes associated with every two adjacent CQI indexes associated with a first modulation mode is 2.

In an embodiment, in the first CQI set, each CQI is associated with an MCS index, and each MCS index is associated with a TBS index.

In an embodiment, there are N CQI indexes associated with the second modulation mode in the first CQI set. In the N CQI indexes associated with the second modulation mode, a difference between TBS indexes associated with every two adjacent CQI indexes is 1, where N is greater than or equal to 2.

In an embodiment, the N CQIs associated with the second modulation mode are N CQIs with the largest indexes in the first CQI set.

In an embodiment, in the first CQI set, a TBS index associated with a CQI with the largest index is 21 or 22.

In an embodiment, in the first CQI set, P CQI indexes are sequentially associated with TBS index 0 to TBS index P-1, where P takes a value of 22 or 23.

In an embodiment, the first CQI set includes M CQI indexes, where M is greater than or equal to 8.

In the M CQI indexes, M-1 CQI indexes are respectively associated with M-1 MCS indexes in MCS index 0 to MCS index M-1.

In an embodiment, the first CQI set includes M CQI indexes, where M is greater than or equal to 8.

In the M CQIs, M-1 CQIs are associated with MCS index 0 to MCS index M-2, respectively.

In an embodiment, for an in-band deployment, the reported CQI is less than or equal to a CQI index associated with a TBS index L, and L is equal to 16 or 17.

In an embodiment, there is at least one CQI subset in the first CQI set. An MCS index or a TBS index or a code rate that each CQI index is associated with in the CQI subset is the same, and a repetition number that each CQI index is associated with in the CQI subset is different.

In an embodiment, there are at least two CQIs in the first CQI set, which satisfy at least one of:

the CQI indexes are in negative correlation with code rates associated with the CQI indexes;
the CQI indexes are in negative correlation with MCS indexes associated with the CQI indexes; and
the CQI indexes are in negative correlation with TBS indexes associated with the CQI indexes.

In an embodiment, the step 220 includes: receiving the CQI based on the first CQI set, and receiving a repetition number of a PDCCH based on the first CQI set.

In an embodiment, the step 220 includes:

in a case where the repetition number of the PDCCH is less than or equal to a threshold value, receiving the CQI based on the first CQI set, and receiving the repetition number of the PDCCH based on the first CQI set; or
in a case where the repetition number of the PDCCH is greater than the threshold value, receiving the repetition number of the PDCCH.

In an embodiment, step 220 includes: receiving the CQI based on the first CQI set by using a semi-persistent scheduling physical uplink shared channel.

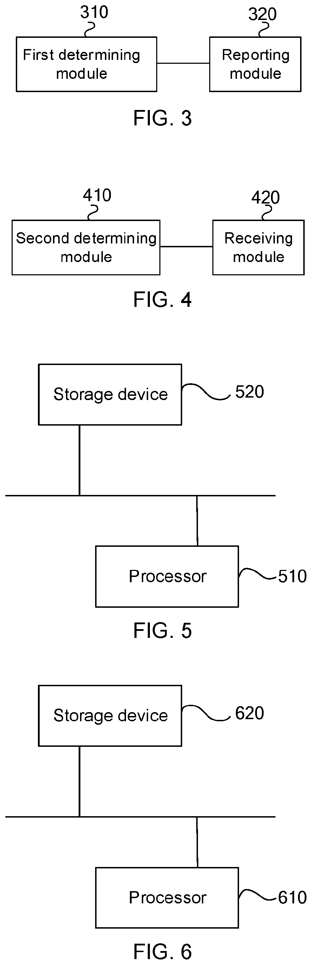

In the embodiments of the present disclosure, a channel quality reporting device is further provided. FIG. 3 is a schematic structural diagram of a channel quality reporting device, in accordance with an embodiment. As shown in FIG. 3, the channel quality reporting device includes a first determining module 310 and a reporting module 320.

The first determining module 310 is configured to determine a first CQI set. The first CQI set includes association relationships between CQIs and channel quality parameter(s). The channel quality parameter(s) include at least one of a modulation mode, a code rate, a spectrum efficiency, an MCS index, a TBS index or a repetition number.

The reporting module 320 is configured to report a CQI based on the first CQI set.

The channel quality reporting device in this embodiment reports the CQI based on the association relationships between the CQIs and the channel quality parameter(s), so that the flexibility of the CQI reporting is improved, and a service node may accurately acquire the channel quality, thereby improving the scheduling efficiency and the communication performance.

In an embodiment, in the first CQI set, there is at least one CQI index. The CQI index is associated with a code rate equal to an average value of code rates corresponding to two adjacent CQI indexes in a predefined second CQI set.

In an embodiment, there is at least one CQI index k in the first CQI set. A code rate associated with the CQI index k is equal to an average value of code rates corresponding to a CQI index k-1 and a CQI index k+1 in the first CQI set, where k is greater than 0 and less than 31.

In an embodiment, there is at least one CQI index h in the first CQI set. A code rate associated with the CQI index h is equal to an average value of code rates corresponding to a CQI index h-1 and a CQI index h+2 in the first CQI set, where h is greater than 0 and less than 29.

Alternatively, there is at least one CQI index h in the first CQI set. A code rate associated with the CQI index h is equal to an average value of code rates corresponding to a CQI index h-2 and a CQI index h+1 in the first CQI set, where h is greater than 1 and less than 30.

In an embodiment, in the first CQI set, a difference between TBS indexes associated with every two adjacent CQI indexes associated with a first modulation mode is 2.

In an embodiment, in the first CQI set, each CQI is associated with an MCS index, and each MCS index is associated with a TBS index.

In an embodiment, in the first CQI set, there are N CQI indexes associated with a second modulation mode. In the N CQI indexes associated with the second modulation mode, a difference between TBS indexes associated with every two adjacent CQI indexes is 1, where N is greater than or equal to 2.

In an embodiment, the N CQIs associated with the second modulation mode are N CQIs with the largest indexes in the first CQI set.

In an embodiment, in the first CQI set, a TBS index associated with a CQI with the largest index is 21 or 22.

In an embodiment, in the first CQI set, P CQI indexes are sequentially associated with TBS index 0 to TBS index P-1, where P takes a value of 22 or 23.

In an embodiment, the first CQI set includes M CQI indexes, where M is greater than or equal to 8.

In the M CQI indexes, M-1 CQI indexes are respectively associated with M-1 MCS indexes in MCS index 0 to MCS index M-1.

In an embodiment, the first CQI set includes M CQI indexes, and M is greater than or equal to 8.

In the M CQIs, M-1 CQIs are associated with MCS index 0 to MCS index M-2, respectively.

In an embodiment, for an in-band deployment, the reported CQI is less than or equal to a CQI index associated with a TBS index L, where L is equal to 16 or 17.

In an embodiment, there is at least one CQI subset in the first CQI set. An MCS index or a TBS index or a code rate that each CQI index is associated with in the CQI subset is the same, and a repetition number that each CQI index is associated with in the CQI subset is different.

In an embodiment, there are at least two CQIs in the first CQI set, which satisfy at least one of:

the CQI indexes are in negative correlation with code rates associated with the CQI indexes;
the CQI indexes are in negative correlation with MCS indexes associated with the CQI indexes; and
the CQI indexes are in negative correlation with TBS indexes associated with the CQI indexes.

In an embodiment, the reporting module 320 is further configured to:
in a case where a channel quality reporting instruction is received, report the CQI based on the first CQI set, and report a repetition number of a PDCCH based on the first CQI set.

In an embodiment, the reporting module 320 is configured to:
in a case where the channel quality reporting instruction is received and the repetition number of the PDCCH is less than or equal to a threshold value, report the CQI based on the first CQI set, and report the repetition number of the PDCCH based on the first CQI set.

In an embodiment, the reporting module 320 is configured to:
in a case where the channel quality reporting instruction is received and the repetition number of the PDCCH is greater than the threshold value, report the repetition number of the PDCCH without reporting the CQI.

In an embodiment, the reporting module 320 is configured to report the CQI based on the first CQI set by using a semi-persistent scheduling physical uplink shared channel.

The channel quality reporting device provided in this embodiment and the channel quality reporting method provided in the above embodiment belong to the same inventive concept. For technical details not described in detail in this embodiment, reference may be made to any one of the above embodiments, and this embodiment has the same beneficial effects as the channel quality reporting method.

In the embodiments of the present disclosure, a channel quality reporting device is further provided. FIG. 4 is a schematic structural diagram of a channel quality receiving device, in accordance with an embodiment. As shown in FIG. 4, the channel quality receiving device includes a second determining module 410 and a receiving module 420.

The second determining module 410 is configured to determine a first CQI set. The first CQI set includes association relationships between CQIs and channel quality parameter(s). The channel quality parameter(s) include at least one of a modulation mode, a code rate, a spectrum efficiency, an MCS index, a TBS index or a repetition number.

The receiving module 420 is configured to receive a CQI based on the first CQI set.

The channel quality reporting device in this embodiment receives the CQI based on the association relationships between the CQIs and the channel quality parameter(s), so as to flexibly and accurately obtain the channel quality, thereby improving the scheduling efficiency and the communication performance.

In an embodiment, there is at least one CQI index in the first CQI set. A code rate associated with the CQI index is equal to an average value of code rates corresponding to two adjacent CQI indexes in a predefined second CQI set.

In an embodiment, there is at least one CQI index k in the first CQI set. A code rate associated with the CQI index k is equal to an average value of code rates corresponding to a CQI index k-1 and a CQI index k+1 in the first CQI set, where k is greater than 0 and less than 31.

In an embodiment, there is at least one CQI index h in the first CQI set. A code rate associated with the CQI index h is equal to an average value of code rates corresponding to a CQI index h-1 and a CQI index h+2 in the first CQI set, where h is greater than 0 and less than 29.

Alternatively, there is at least one CQI index h in the first CQI set. A code rate associated with the CQI index h is equal to an average value of code rates corresponding to a CQI index h-2 and a CQI index h+1 in the first CQI set, where h is greater than 1 and less than 30.

In an embodiment, in the first CQI set, a difference between TBS indexes associated with every two adjacent CQI indexes associated with a first modulation mode is 2.

In an embodiment, in the first CQI set, each CQI is associated with an MCS index, and each MCS index is associated with a TBS index.

In an embodiment, there are N CQI indexes associated with a second modulation mode in the first CQI set. In the N CQI indexes associated with the second modulation mode, a difference between TBS indexes associated with every two adjacent CQI indexes is 1, where N is greater than or equal to 2.

In an embodiment, the N CQIs associated with the second modulation mode are N CQIs with the largest indexes in the first CQI set.

In an embodiment, in the first CQI set, a TBS index associated with a CQI with the largest index is 21 or 22.

In an embodiment, in the first CQI set, P CQI indexes are sequentially associated with TBS index 0 to TBS index P-1, where P takes a value of 22 or 23.

In an embodiment, the first CQI set includes M CQI indexes, where M is greater than or equal to 8.

In the M CQI indexes, M-1 CQI indexes are respectively associated with M-1 MCS indexes in MCS index 0 to MCS index M-1.

In an embodiment, the first CQI set includes M CQI indexes, and M is greater than or equal to 8.

In the M CQIs, M-1 CQIs are associated with MCS index 0 to MCS index M-2, respectively.

In an embodiment, for an in-band deployment, the reported CQI is less than or equal to a CQI index associated with a TBS index L, where L is equal to 16 or 17.

In an embodiment, in the first CQI set, there is at least one CQI subset. An MCS index or a TBS index or a code rate that each CQI index is associated with in the CQI subset is the same, and a repetition number that each CQI index is associated with in the CQI subset is different.

In an embodiment, in the first CQI set, there are at least two CQIs, which satisfy at least one of:

the CQI indexes are in negative correlation with code rates associated with the CQI indexes;
the CQI indexes are in negative correlation with MCS indexes associated with the CQI indexes; and
the CQI indexes are in negative correlation with TBS indexes associated with the CQI indexes.

In an embodiment, the receiving module 420 is further configured to:
receive the CQI based on the first CQI set, and receive a repetition number of a PDCCH based on the first CQI set.

In an embodiment, the receiving module 420 is configured to:
in a case where the repetition number of the PDCCH is less than or equal to a threshold value, receive the CQI based on the first CQI set, and receive the repetition number of the PDCCH based on the first CQI set.

In an embodiment, the receiving module 420 is configured to:
in a case where the repetition number of the PDCCH is greater than the threshold value, receive the repetition number of the PDCCH.

In an embodiment, the receiving module 420 is configured to:
receive the CQI based on the first CQI set by using a semi-persistent scheduling physical uplink shared channel.

The channel quality reporting device provided in this embodiment and the channel quality reporting method provided in the above embodiment belong to the same inventive concept. For technical details not described in detail in this embodiment, reference may be made to any one of the above embodiments, and this embodiment has the same beneficial effects as the channel quality reporting method.

In the embodiments of the present disclosure, a terminal is further provided. The channel quality reporting method may be executed by the channel quality reporting device. The channel quality reporting device may be realized by software and/or hardware, and may be integrated in the terminal. The terminal includes, but is not limited to, a user equipment (UE) such as a desktop computer, a notebook computer, a smart phone or a tablet computer.

FIG. 5 is a schematic diagram of a hardware structure of a terminal, in accordance with an embodiment. As shown in FIG. 5, the terminal provided in this embodiment includes processor(s) 510 and a storage device 520. There may be one or more processors in the terminal, and FIG. 5 exemplarily shows one processor 510. The processor 510 and the storage device 520 in the apparatus may be connected by a bus or in other ways, and FIG. 5 exemplarily shows the connection by the bus.

One or more programs are executed by the one or more processors 510, so that the one or more processors implement the channel quality reporting method in any one of the above embodiments.

The storage device 520 in the terminal is used as a computer-readable storage medium, and may be used for storing one or more programs. The programs may include software programs, computer-executable programs and modules, such as program instructions/modules corresponding to the channel quality reporting method in the embodiments of the present disclosure (e.g., the modules in the channel quality reporting device shown in FIG. 3, and the modules including the first determining module 310 and the reporting module 320). The processor(s) 510 run the software programs, the instructions and the modules stored in the storage device 520 to execute various functional applications and execute data processing of the terminal, i.e., to implement the channel quality reporting method in the above method embodiments.

The storage device 520 mainly includes a program storage area and a data storage area. The program storage area may store operating system(s), and application program(s) required by at least one function. The data storage area may store data (e.g., the first CQI set and the channel quality parameters in the above embodiments) created according to the use of the device. In addition, the storage device 520 may include a high speed random access memory, and may further include a non-volatile memory, such as at least one magnetic disk storage device, a flash memory device, or other non-volatile solid state storage devices. In some examples, the storage device 520 may include memories arranged remotely relative to the processor(s) 510, and these memories arranged remotely may be connected to the terminal through a network. Examples of the network include, but are not limited to, the internet, an intranet, a local area network, a mobile communication network, and combinations thereof.

Moreover, when the one or more programs included in the above terminal are executed by the one or more processors 510, following operations are realized, which includes: determining a first CQI set, the first CQI set including association relationships between CQIs and channel quality parameter(s), and the channel quality parameter(s) including at least one of a modulation mode, a code rate, a spectrum efficiency, an MCS index, a TBS index or a repetition number; and reporting a CQI based on the first CQI set.

The terminal provided in this embodiment and the channel quality reporting method provided in the above embodiment belong to the same inventive concept. For technical details not described in detail in this embodiment, reference may be made to any one of the above embodiments, and this embodiment has the same beneficial effects as the channel quality reporting method.

In the embodiments of the present disclosure, a service node is further provided. The channel quality reporting method may be executed by the channel quality reporting device. The channel quality reporting device may be implemented by software and/or hardware, and may be integrated in the service node. The service node includes, but is not limited to, a base station, a centralized control unit, or a transmission reception point (TRP).

FIG. 6 is a schematic diagram of a hardware structure of a service node, in accordance with an embodiment. As shown in FIG. 6, the service node provided in this embodiment includes processor(s) 610 and a storage device 620. There may be may be one or more processors in the service node, and FIG. 6 exemplarily shows one processor 610. The processor 610 and the storage device 620 in the apparatus may be connected by a bus or in other ways, and FIG. 6 exemplarily shows the connection by the bus.

One or more programs are executed by the one or more processors 610, so that the one or more processors implement the channel quality receiving method in any one of the above embodiments.

The storage device 620 in the service node is used as a computer-readable storage medium, and may be configured to store one or more programs. The programs may include software programs, computer-executable programs and modules, such as program instructions/modules corresponding to the channel quality receiving method in the embodiments of the present disclosure (e.g., the modules in the channel quality receiving device shown in FIG. 4, and the modules including the second determining module 410 and the receiving module 420). The processor(s) 610 run the software programs, the instructions and the modules stored in the storage device 620 to execute various functional applications of the service node and execute data processing, i.e., to implement the channel quality receiving method in the above method embodiments.

The storage device 620 mainly includes a program storage area and a data storage area. The program storage area may store operating system(s), and application program(s) required by at least one function. The data storage area may store data (e.g., the first CQI set and the channel quality parameters in the above embodiments) created according to the use of the device. In addition, the storage device 620 may include a high speed random access memory, and may further include a non-volatile memory, such as at least one magnetic disk storage device, a flash memory device, or other non-volatile solid state storage devices. In some examples, the storage device 620 may include memories arranged remotely relative to the processor(s) 610, and these memories arranged remotely may be connected to the service node through a network. Examples of the network include, but are not limited to, the internet, an intranet, a local area network, a mobile communication network, and combinations thereof.

Moreover, when the one or more programs included in the above service node are executed by the one or more processors 610, following operations are realized, which includes: determining a first CQI set, the first CQI set including association relationships between CQIs and channel quality parameter(s), and the channel quality parameter(s) including at least one of a modulation mode, a code rate, a spectrum efficiency, an MCS index, a TBS index or a repetition number; and receiving a CQI is received based on the first CQI set.

The service node provided in this embodiment and the channel quality receiving method provided in the above embodiment belong to the same inventive concept. For technical details not described in detail in this embodiment, reference may be made to any one of the above embodiments, and this embodiment has the same beneficial effects as the channel quality receiving method.

In the embodiments of the present disclosure, a storage medium including computer-executable instructions is further provided. When executed by a computer processor, the computer-executable instructions are configured to execute a channel quality reporting method or a channel quality receiving method.

The channel quality reporting method includes: determining a first CQI set, the first CQI set including association relationships between CQIs and channel quality parameter(s), and the channel quality parameter(s) including at least one of a modulation mode, a code rate, a spectrum efficiency, an MCS index, a TBS index or a repetition number; and reporting a CQI based on the first CQI set.

The channel quality receiving method includes: determining a first CQI set, the first CQI set including association relationships between CQIs and channel quality parameter(s), and the channel quality parameter(s) including at least one of a modulation mode, a code rate, a spectrum efficiency, an MCS index, a TBS index or a repetition number; and receiving a CQI based on the first CQI set.

Through the above description of the embodiments, those skilled in the art will appreciate that the present disclosure may be implemented by software and general hardware, or may be implemented by hardware. Based on such understanding, the technical solutions in the present disclosure may be embodied in a form of a software product. A software product of a computer may be stored in a computer-readable storage medium, such as a floppy disk, a read-only memory (ROM), a random access memory (RAM), a flash memory, a hard disk or an optical disk of the computer, and includes a plurality of instructions for enabling a computer device (which may be a personal computer, a server, or a network device) to execute the method in any embodiment of the present disclosure.

The above descriptions are only exemplary embodiments of the present disclosure, and are not intended to limit the protection scope of the present disclosure.

The block diagrams of any logic flows in the drawings of the present disclosure may represent program steps, or may represent interconnected logic circuits, modules and functions, or may represent combinations of the program steps and the logic circuits, the modules and the functions. Computer program(s) may be stored in a memory. The memory may be of any type suitable to a local technical environment, and may be implemented by using any suitable data storage technology. The memory may be, for example, but not limited to, a read only memory (ROM), a random access memory (RAM), an optical storage device or a system (a digital versatile disk DVD or a CD disk). The computer-readable storage medium may include a non-transitory storage medium. A data processor may be of any type suitable to the local technical environment, and may be, for example, but not limited to, a general purpose computer, a special purpose computer, a microprocessor, a digital signal processor (DSP), an application specific integrated circuit (ASIC), a programmable logic device (FGPA), or a processor based on a multi-core processor architecture.

The detailed description of the exemplary embodiments of the present disclosure is provided in the foregoing through exemplary and non-limited examples. Various modifications and adjustments to the foregoing embodiments are apparent to those skilled in the art in view of the accompanying drawings and the claims, without departing from the scope of the present disclosure. Therefore, the proper scope of the present disclosure is determined according to the claims.

**Claims**

1. A channel quality reporting method, comprising:

   determining a first channel quality indicator (CQI) set, the first CQI set including association relationships between CQIs and a channel quality parameter, and the channel quality parameter including at least one of a modulation mode, a code rate, a spectrum efficiency, a modulation and coding scheme (MCS) index, a transport block size (TBS) index or a repetition number; and
   reporting a CQI based on the first CQI set.

2. The method according to claim 1, wherein there is at least one CQI index in the first CQI set, and a code rate associated with each of the at least one CQI index is equal to an average value of code rates corresponding to two adjacent CQI indexes in a predefined second CQI set.

3. The method according to claim 1, wherein a difference between code rates corresponding to any two adjacent CQIs associated with a second modulation mode in the first CQI set is less than a difference between code rates corresponding to any two adjacent CQIs associated with the second modulation mode in a predefined second CQI set.

4. The method according to claim 1, wherein in the first CQI set, there is at least one CQI index k, and a code rate associated with the CQI index k is equal to an average value of code rates corresponding to a CQI index k-1 and a CQI index k+1 in the first CQI set, where k is greater than 0 and less than 31.

5. The method according to claim 1, wherein in the first CQI set, there is at least one CQI index h, and a code rate associated with the CQI index h is equal to an average value of code rates corresponding to a CQI index h-1 and a CQI index h+2 in the first CQI set, where h is greater than 0 and less than 29; or
   in the first CQI set, there is at least one CQI index h, and a code rate associated with the CQI index h is equal to an average value of code rates corresponding to a CQI index h-2 and a CQI index h+1 in the first CQI set, where h is greater than 1 and less than 30.

6. The method according to claim 1, wherein in the first CQI set, a difference between TBS indexes corresponding to every two adjacent CQI indexes associated with a first modulation mode is 2.

7. The method according to claim 6, wherein in the first CQI set, each CQI is associated with an MCS index, and each MCS index is associated with a TBS index.

8. The method according to claim 1, wherein in the first CQI set, there are N CQI indexes associated with a second modulation mode, and in the N CQI indexes associated with the second modulation mode, a difference between TBS indexes associated with every two adjacent CQI indexes is 1, where N is greater than or equal to 2.

9. The method according to claim 8, wherein the N CQIs associated with the second modulation mode are N CQIs with largest indexes in the first CQI set.

10. The method according to claim 1, wherein in the first CQI set, a TBS index associated with a CQI with a largest index is 21 or 22.

11. The method according to claim 1, wherein in the first CQI set, P CQI indexes are sequentially associated with TBS index 0 to TBS index P-1, where P takes a value of 22 or 23.

12. The method according to claim 1, wherein the first CQI set includes M CQI indexes, where M is greater than or equal to 8;
in the M CQI indexes, M-1 CQI indexes are respectively associated with M-1 MCS indexes in MCS index 0 to MCS index M-1.

13. The method according to claim 1, wherein the first CQI set includes M CQI indexes, where M is greater than or equal to 8; and
in the M CQIs, M-1 CQIs are respectively associated with MCS index 0 to MCS index M-2.

14. The method according to claim 1, wherein for an in-band deployment, the reported CQI is less than or equal to a CQI index associated with a TBS index L, where L is equal to 16 or 17.

15. The method according to claim 1, wherein in the first CQI set, there is at least one CQI subset, an MCS index or a TBS index or a code rate that each CQI index in the CQI subset is associated with is same, and a repetition number that each CQI index in the CQI subset is associated with is different.

16. The method according to claim 1, wherein in the first CQI set, there are at least two CQIs that satisfy at least one of:

   the at least two CQI indexes are in negative correlation with code rates associated with the at least two CQI indexes;
   the at least two CQI indexes are in negative correlation with MCS indexes associated with the at least two CQI indexes; and
   the at least two CQI indexes are in negative correlation with TBS indexes associated with the at least two CQI indexes.

17. The method according to claim 1, wherein reporting the CQI based on the first CQI set, includes:
in a case where a channel quality reporting instruction is received, reporting the CQI and reporting a repetition number of a physical downlink control channel (PDCCH) based on the first CQI set.

18. The method according to claim 1, wherein reporting the CQI based on the first CQI set, includes:
in a case where a channel quality reporting instruction is received and a repetition number of a PDCCH is less than or equal to a threshold value, reporting the CQI and reporting the repetition number of the PDCCH based on the first CQI set.

19. The method according to claim 1, wherein reporting the CQI based on the first CQI set, includes: reporting the CQI based on the first CQI set by using a semi-persistent scheduling physical uplink shared channel.

20. A channel quality receiving method, comprising:

   determining a CQI set, the first CQI set including association relationships between CQIs and a channel quality parameter, and the channel quality parameter including at least one of a modulation mode, a code rate, a spectrum efficiency, an MCS index, a TBS index or a repetition number; and

receiving a CQI based on the first CQI set.

21. A channel quality reporting device, comprising:

a first determining module configured to determine a first CQI set, the first CQI set including association relationships between CQIs and a channel quality parameter, and the channel quality parameter including at least one of a modulation mode, a code rate, a spectrum efficiency, an MCS index, a TBS index or a repetition number; and

a reporting module configured to report a CQI based on the first CQI set.

22. A channel quality receiving device, comprising:

a second determining module configured to determine a first CQI set, the first CQI set including association relationships between CQIs and a channel quality parameter, and the channel quality parameter including at least one of a modulation mode, a code rate, a spectrum efficiency, an MCS index, a TBS index or a repetition number; and

a receiving module configured to receive a CQI based on the first CQI set.

23. A terminal, comprising:

one or more processors; and

a storage device configured to store one or more programs; and

when the one or more programs are executed by the one or more processors, the one or more processors implementing the channel quality reporting method according to any one of claims 1 to 19.

24. A service node, comprising:

one or more processors; and

a storage device configured to store one or more programs; and

when the one or more programs are executed by the one or more processors, the one or more processors implementing the channel quality receiving method according to claim 20.

25. A computer-readable storage medium storing a computer program therein, and when the computer program is executed by a processor, the channel quality reporting method according to any one of claims 1 to 19 or the channel quality receiving method according to claim 20 being implemented.

Determine a first channel quality indicator (CQI) set, the first CQI set comprising an association relationship between a CQI and channel quality parameters, and the channel quality parameters comprising at least one of a modulation mode, a code rate, spectral efficiency, a modulation and coding scheme (MCS) index, a transport block size (TBS) index, and the number of times of repetition ~110

Report the CQI on the basis of first CQI set ~120

FIG. 1

Determine a CQI set, the first CQI set including association relationships between CQIs and channel quality parameter(s), and the channel quality parameter(s) including at least one of a modulation mode, a code rate, a spectrum efficiency, a modulation and coding scheme (MCS) index, a transport block size (TBS) index or a repetition number ~210

Receive a CQI based on the first CQI set ~220

FIG. 2

...

310

First determining module

320

Reporting module

FIG. 3

410

Second determining module

420

Receiving module

FIG. 4

Storage device — 520

Processor — 510

FIG. 5

Storage device — 620

Processor — 610

FIG. 6

## INTERNATIONAL SEARCH REPORT

| International application No. |
|---|
| **PCT/CN2021/106858** |

**A. CLASSIFICATION OF SUBJECT MATTER**

H04L 1/00(2006.01)i; H04W 72/04(2009.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 信道质量指示, 调制编码策略, 传输块尺寸, 重复次数, 索引, 表, 设计, 灵活, 扩展, 增强, 新空口, 适应, 适用, 码率, 平均, CQI, MCS, TBS, repeat+, index, table, design, flexible, extent, enhanc+, NR, adapt+, rate, averag+

**C. DOCUMENTS CONSIDERED TO BE RELEVANT**

| Category* | Citation of document, with indication, where appropriate, of the relevant passages | Relevant to claim No. |
|---|---|---|
| PX | CN 111934821 A (ZTE CORPORATION) 13 November 2020 (2020-11-13) claims 1-25 | 1-25 |
| X | CN 103944855 A (ZTE CORPORATION) 23 July 2014 (2014-07-23) description paragraphs [0052]-[0187] | 1-25 |
| X | US 2019253121 A1 (INTEL CORP.) 15 August 2019 (2019-08-15) description paragraphs [0019]-[0219] | 1-25 |
| X | CN 111357220 A (SAMSUNG ELECTRONICS CO., LTD.) 30 June 2020 (2020-06-30) description paragraphs [0030]-[0224] | 1, 16-25 |
| X | SAMSUNG. ""CQI Definition"" *3GPP TSG RAN WG1 Meeting #91 R1-1720292*, 17 November 2017 (2017-11-17), sections 2 and 3 | 1, 16-25 |
| A | CN 107278354 A (TELEFONAKTIEBOLAGET LM ERICSSON (PUBL)) 20 October 2017 (2017-10-20) entire document | 1-25 |
| A | CN 106464647 A (KT CORPORATION) 22 February 2017 (2017-02-22) entire document | 1-25 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 September 2021** | **11 October 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

# EP 4 195 543 A1

## INTERNATIONAL SEARCH REPORT
### Information on patent family members

| International application No. |
| --- |
| **PCT/CN2021/106858** |

| Patent document cited in search report | | | Publication date (day/month/year) | Patent family member(s) | | | Publication date (day/month/year) |
| --- | --- | --- | --- | --- | --- | --- | --- |
| CN | 111934821 | A | 13 November 2020 | None | | | |
| CN | 103944855 | A | 23 July 2014 | EP | 3419237 | A3 | 24 April 2019 |
| | | | | US | 2017366298 | A1 | 21 December 2017 |
| | | | | WO | 2014110931 | A1 | 24 July 2014 |
| | | | | EP | 3419237 | A2 | 26 December 2018 |
| | | | | US | 10218456 | B2 | 26 February 2019 |
| | | | | AU | 2013373901 | A1 | 06 August 2015 |
| | | | | CN | 103944855 | B | 17 August 2018 |
| | | | | EP | 2933969 | A1 | 21 October 2015 |
| | | | | AU | 2013373901 | B2 | 15 December 2016 |
| | | | | KR | 20150097777 | A | 26 August 2015 |
| | | | | EP | 2933969 | A4 | 02 March 2016 |
| | | | | KR | 101746317 | B1 | 27 June 2017 |
| | | | | US | 2015372784 | A1 | 24 December 2015 |
| | | | | RU | 2015132033 | A | 27 February 2017 |
| | | | | JP | 2016509787 | A | 31 March 2016 |
| | | | | RU | 2615763 | C2 | 11 April 2017 |
| | | | | US | 9794022 | B2 | 17 October 2017 |
| | | | | EP | 2933969 | B1 | 22 August 2018 |
| | | | | ES | 2694104 | T3 | 18 December 2018 |
| | | | | JP | 6067137 | B2 | 25 January 2017 |
| | | | | ID | 201703258 | A | 31 March 2017 |
| | | | | VN | 10021221 | B | 25 July 2019 |
| | | | | ZA | 201505863 | A | 21 December 2016 |
| | | | | BR | 112015017291 | A2 | 03 October 2017 |
| | | | | IN | 201504326 | P4 | 01 July 2016 |
| | | | | VN | 44371 | A | 26 October 2015 |
| US | 2019253121 | A1 | 15 August 2019 | None | | | |
| CN | 111357220 | A | 30 June 2020 | WO | 2019098747 | A1 | 23 May 2019 |
| | | | | KR | 20190056866 | A | 27 May 2019 |
| | | | | EP | 3706346 | A4 | 16 December 2020 |
| | | | | EP | 3706346 | A1 | 09 September 2020 |
| | | | | US | 2020366406 | A1 | 19 November 2020 |
| | | | | IN | 202017021051 | A | 14 August 2020 |
| CN | 107278354 | A | 20 October 2017 | US | 2018359051 | A1 | 13 December 2018 |
| | | | | JP | 2019080319 | A | 23 May 2019 |
| | | | | JP | 6448156 | B2 | 09 January 2019 |
| | | | | BR | 112017016268 | A2 | 27 March 2018 |
| | | | | US | 10560219 | B2 | 11 February 2020 |
| | | | | CN | 107278354 | B | 03 July 2020 |
| | | | | US | 10079655 | B2 | 18 September 2018 |
| | | | | US | 2016365944 | A1 | 15 December 2016 |
| | | | | EP | 3251248 | A1 | 06 December 2017 |
| | | | | WO | 2016122380 | A1 | 04 August 2016 |
| | | | | JP | 2018509803 | A | 05 April 2018 |
| | | | | JP | 6640964 | B2 | 05 February 2020 |
| CN | 106464647 | A | 22 February 2017 | CN | 110460409 | A | 15 November 2019 |
| | | | | KR | 20150111819 | A | 06 October 2015 |
| | | | | CN | 106464647 | B | 13 September 2019 |

Form PCT/ISA/210 (patent family annex) (January 2015)

**INTERNATIONAL SEARCH REPORT**
Information on patent family members

International application No.

**PCT/CN2021/106858**

| Patent document cited in search report | Publication date (day/month/year) | Patent family member(s) | | | Publication date (day/month/year) |
|---|---|---|---|---|---|
| | | KR | 101632354 | B1 | 22 June 2016 |
| | | WO | 2015141960 | A1 | 24 September 2015 |
| | | US | 9461771 | B2 | 04 October 2016 |
| | | US | 2015271794 | A1 | 24 September 2015 |

Form PCT/ISA/210 (patent family annex) (January 2015)